# FASCICULE DE BREVET EUROPEEN

(11) **EP 1 540 177 B1**
(45) Date de publication et mention de la délivrance du brevet: **19.10.2011**
(21) Numéro de dépôt: 03797139.7
(22) Date de dépôt: 16.09.2003
(51) Int. Cl.: F03D 1/02

(54) **DISPOSITIF D'ENTRAINEMENT POUR UNE EOLIENNE MUNIE DE DEUX HELICES CONTRE ROTATIVES**
MIT ZWEI GEGENLÄUFIGEN ROTOREN VERSEHENE ANTRIEBSVORRICHTUNG FÜR EINE WINDMÜHLE
DRIVE DEVICE FOR A WINDMILL PROVIDED WITH TWO COUNTER-ROTATING ROTORS

(30) Priorité: 17.09.2002 CH 157002
(43) Date de publication de la demande: 15.06.2005
(73) Titulaire: Eotheme Sarl, 1880 Bex (CH)
(72) Inventeur: WACINSKI, André, CH-1880 Bex (CH)
(74) Mandataire: Reuteler, Raymond Werner
(86) Numéro de dépôt international: PCT/CH2003/000625
(87) Numéro de publication internationale: WO 2004/027258

(56) Documents cités:
- WO-A-96/11338
- DE-A- 3 714 859
- DE-A- 10 107 956
- FR-A- 1 078 401
- GB-A- 476 716

## Description

La présente invention concerne l'entraînement d'une génératrice électrique ou d'un autre dispositif nécessitant une source d'énergie provenant d'une éolienne à deux hélices contre rotatives.

Selon la pratique courante, les éoliennes commercialisées actuellement possèdent une seule hélice. Théoriquement, le rendement aérodynamique de l'entraînement par une hélice ne peut pas dépasser 59.6% (Betz, A., Wind-Energie und Ihre Ausnützung durch Windmuelen, van den Hoeck & Ruprecht, Goettingen,1926). Dans la pratique, ce résultat est encore plus faible (env. 40 à 45 % dans les meilleures conditions).

Une solution avantageuse pour augmenter le rendement global d'une éolienne consiste à concevoir un dispositif à deux hélices contre rotatives.

Plusieurs documents présentent des méthodes ou des dispositifs d'entraînement à deux hélices. Un des plus anciens proposé par Schönball (US patent 3,974,396 /1976) décrit un dispositif comprenant une hélice entraînant un rotor avec une autre hélice entraînant le stator d'une génératrice. D'autre part, il prévoit une possibilité de combinaison des stators et des rotors pour pouvoir régler l'excitation électrique de la génératrice et influencer en même temps la vitesse de rotation des hélices. En ce qui concerne la chaîne cinématique, ce dispositif prévoit une liaison mécanique entre deux hélices.

Un autre brevet connu: US patent 5,506,453 /1996 de McCombs décrit un arrangement avec deux hélices, entraînant directement le rotor et le stator d'une génératrice de manière similaire à ce qui a été décrit plus haut. La régulation du nombre de tours de l'ensemble peut se faire par un mécanisme agissant sur l'inclinaison des pales ou un autre dispositif.

Les deux brevets d'Appa : US patent 6,127,739 /2000 et 6,278,197 B1 /2001 sont basés sur un principe similaire par rapport au brevet de McCombs en ce qui concerne l'entraînement de la génératrice. La différence par rapport aux brevets précédents se situe dans la construction des pales; celles-ci possèdent des canaux longitudinaux permettant le passage de l'air qui est aspiré au centre de rotation et éjecté à l'extrémité des pales par la force centrifuge. La direction de la sortie de l'air est tangentielle à la circonférence décrite par les extrémités des pales. Ceci a été prévu pour augmenter le rendement aérodynamique de l'hélice.

Un autre brevet connu: DE 37 14 859 / 1988 de Schopf décrit un autre arrangement avec deux hélices: une hélice entraînant une génératrice et l'autre entraînant une réglage du pas de la premiére hélice.

Les différents dispositifs à double hélice connus décrits ci-dessus ont généralement l'inconvénient d'être accouplés à une génératrice par un arbre de transmission tournant à faible vitesse. En conséquence, pour une puissance donnée les dimensions et respectivement la masse de la génératrice seront assez importantes, ce qui nécessite des mâts supports de forte résistance.

Un premier but de l'invention est donc de proposer un dispositif d'entraînement pour une éolienne à deux hélices contre rotatives amélioré par rapport aux dispositifs connus, c'est-à-dire ayant un rendement amélioré relativement aux dispositifs à une seule hélice et pouvant être accouplé à une génératrice de faibles dimensions, comparables à celles d'une génératrice accouplée à une éolienne à une seule hélice.

Avantageusement le dispositif sera donc prévu de manière à ce que qu'il puisse être appliqué à des infrastructures existantes, ce qui consisterait à placer une deuxième hélice, montée juste devant ou juste derrière l'hélice existante tout en utilisant l'infrastructure déjà en place.

Un tel dispositif est explicitement décrit à la revendication 1, des formes particulières et variantes étant décrites dans les revendications dépendantes.

D'autres avantage du dispositif selon l'invention seront apparents à l'étude de la description ci-dessous qui est à considérer en regard du dessin annexé comportant les figures où :
la figure 1 montre une vue générale de côté d'une l'éolienne selon l'invention,
la figure. 2 est une coupe longitudinale d'une première forme d'exécution d'un dispositif d'entraînement selon l'invention,
la figure. 3 est une coupe longitudinale d'une deuxième forme d'exécution d'un dispositif d'entraînement selon l'invention,
la figure 4 est une vue latérale montrant des variantes de positionnement relatif des deux hélices,
la figure 5 est une vue de face montrant des variantes de forme des deux hélices, et
la figure. 6 est une coupe transversale d'un dispositif de freinage associé à un dispositif d'entraînement selon l'invention.

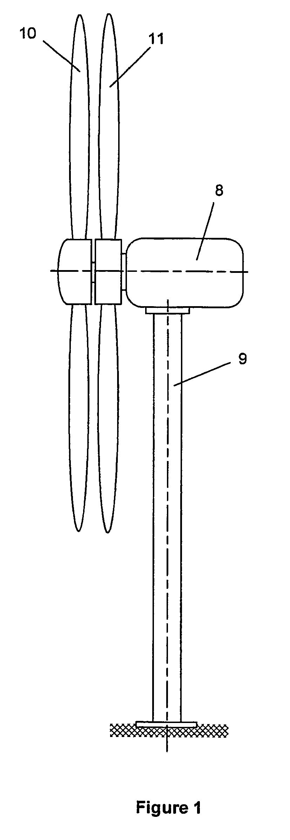

La figure 1 montre un arrangement préférentiel des deux hélices 10 et 11 tournant en sens contraire, étant placées face au vent devant le mât tubulaire 9. Le dispositif d'entraînement selon l'invention et la génératrice sont placés à l'intérieur de la nacelle 8.

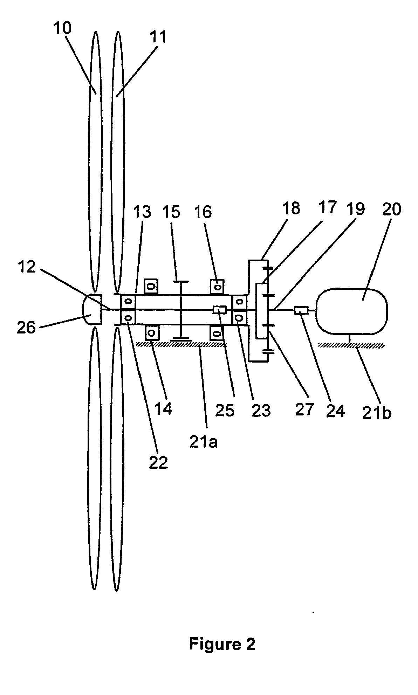

Une première forme d'exécution d'un dispositif d'entraînement est visible à la figure 2. La première hélice 10 et son moyeu 26 sont supportés par un arbre 12 guidé par les roulements (paliers) 22 et 23 disposés à l'intérieur d'un arbre creux 13. L'autre hélice 11 est supportée par l'arbre creux 13 qui à son tour est guidé par les roulements (paliers) 14 et 16. Ces deux paliers 14 et 16 sont solidaires d'une portion 21 a du bâti principal de la nacelle 8.

Les deux arbres 12 et 13 sont couplés à un multiplicateur épicycloïdal, l'arbre 12 étant couplé par un accouplement 25 au train de roues planétaires 17 du multiplicateur épicycloïdal, alors que l'arbre creux 13 est couplé à la couronne 18 du multiplicateur épicycloïdal. La roue solaire du multiplicateur épicycloïdal est couplée à un arbre 19 qui entraîne la génératrice 20 par l'intermédiaire d'un accouplement 24. Vu que les deux hélices 10 et 11 tournent en sens opposés, la couronne 18 et le train de roues planétaires 17 tournent aussi en sens opposés. La transmission de la puissance des arbres 12 et 13 vers l'arbre de génératrice 19 se fait donc par les engrenages planétaires 27 du train de roues planétaires 17 faisant partie intégrante du multiplicateur épicycloïdal.

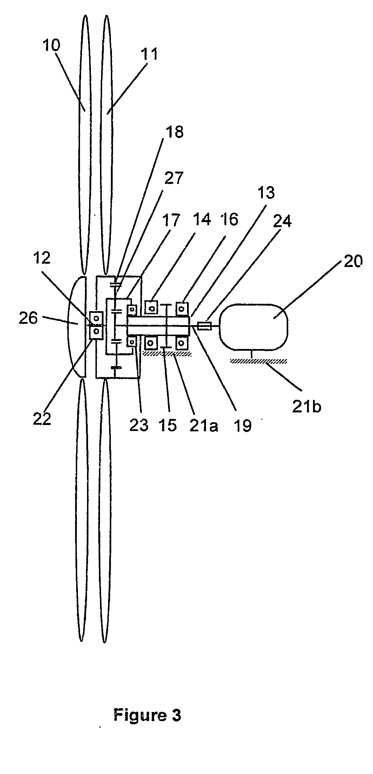

La figure 3 montre une deuxième forme d'exécution d'un dispositif d'entraînement selon l'invention, dans laquelle le multiplicateur épicycloïdal est directement logé dans le moyeu d'une hélice. L'hélice 10 est guidée par les paliers 22 et 23 étant reliée à l'arbre 12 connecté au train de roues planétaires 17, lui-même logé entre ces deux paliers. L'hélice 11, est directement montée sur la couronne 18, elle-même reliée à l'arbre 13 guidé par les paliers 14 et 16. L'arbre 19 est relié d'un côté à la roue solaire et de l'autre côté, par l'intermédiaire d'un accouplement 24, à la génératrice 20.

De manière générale, le fonctionnement d'un dispositif d'entraînement selon l'une ou l'autre des formes d'exécution décrites est semblable.

La vitesse de rotation de l'arbre 19 entraînant la génératrice 20, de même que son couple d'entraînement, sont respectivement proportionnels aux vitesses de rotation et couples fournis par les deux hélices 10 et 11 sur respectivement les arbres 12 et 13. Les sens de rotation de l'hélice 10 et de l'arbre 19 sont les mêmes.

Ainsi, de préférence on cherchera à avoir des vitesses de rotation égales des deux hélices.

La rotation en sens opposés des deux hélices est obtenue par des profils aérodynamiques appropriés. La régulation fine du nombre de tours de chaque hélice peut se faire de façon similaire aux solutions connues jusqu'à présent.

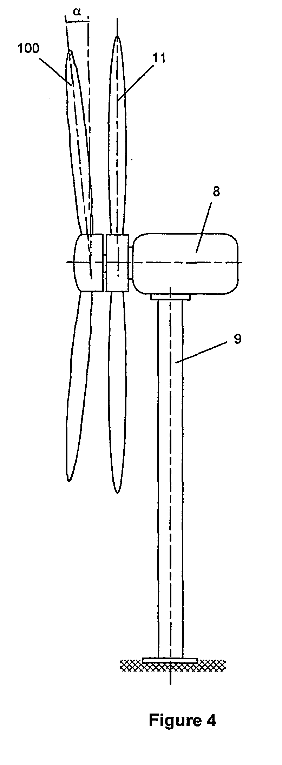

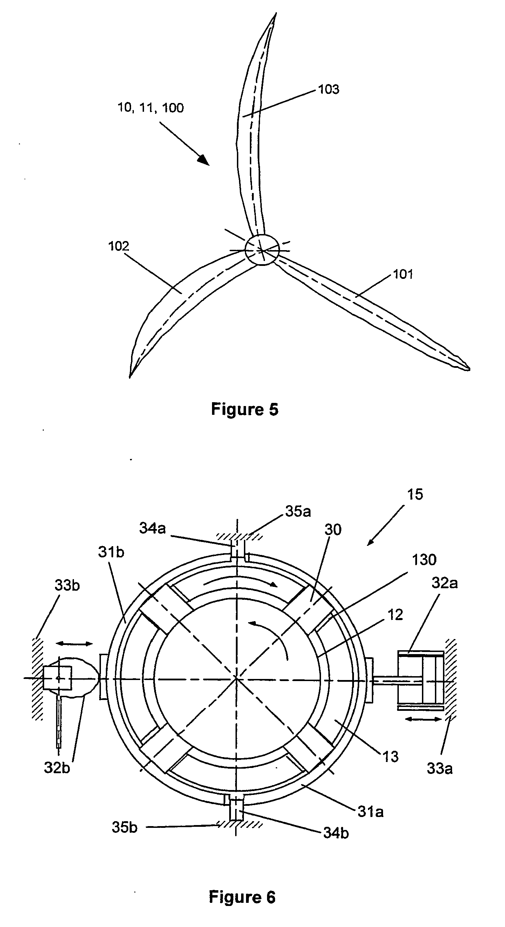

Vu que les deux hélices sont placées dans le même flux d'air, des dispositions particulières peuvent être prises afin qu'elles puissent tourner à la même vitesse. Les figures 4 et 5 montrent différentes variantes de disposition et de formes des hélices permettant d'ajuster par effet aérodynamique la vitesse et le couple fournis par chacune d'elles.

On peut tout d'abord avoir deux hélices 10 et 11 identiques, soit ayant le même diamètre extérieur ainsi que le même nombre de pales, les plans de rotations des deux hélices étant parallèles, comme on le voit aux figures 2 et 3.

En variante, comme représenté à titre d'exemple à la figure 4, les plans de rotation des deux hélices peuvent ne pas être parallèles. Dans l'exemple représenté, la première hélice 100 tourne sur une surface conique dont la pointe est tournée, dans l'exemple représenté, vers la nacelle 8. Selon une première variante, la pointe de la surface conique peut être tournée à l'opposé de la nacelle. L'angle α que fait la surface de rotation par rapport à un plan perpendiculaire au plan de rotation de l'hélice est généralement inférieur à 10°. De préférence l'angle α est inférieur à 5°, encore de préférence inférieur à 3°. En variante, on peut aussi avoir uniquement la deuxième hélice 11 dont la rotation s'effectue sur une surface conique, voire les deux hélices en rotation sur deux surfaces coniques. Dans ce dernier cas, il n'est pas absolument nécessaire que les angles α des deux cônes soient identiques ; on peut même avoir deux surfaces coniques dont les pointes sont tournées l'une contre l'autre ou au contraire sont tournées dans des directions opposées.

Une autre variante,de construction est visible sur la figure 4 où l'on voit que le diamètre extérieur de la première hélice, représentée par sa pale inférieure, peut être différent de celui de la deuxième hélice, de préférence inférieur. Cette différence de diamètre entre les hélices peut être appliquée aussi bien à une paire d'hélices tournant selon deux plans parallèles qu'à une paire d'hélices dont au moins une tourne selon une surface conique.

Des variantes de formes des pales des hélices sont représentées à la figure 5 montrant une hélice 10, 11 ou 100 comportant 3 pales 101, 102 et 103. La pale 101 est absolument conventionnelle son axe étant rectiligne et perpendiculaire à l'axe de rotation. La pale 102 possède un axe courbé. La pale 103 possède aussi un axe courbé, mais sa longueur est inférieure à celle des pales de la deuxième hélice. Les formes de pales représentées ici peuvent être appliquées à une hélice tournant dans un plan perpendiculaire à son axe de rotation ou alors sur une surface conique. Il est évident que toutes les pales d'une hélice déterminée d'une éolienne auront la même forme et les mêmes dimensions, par contre la forme et les dimensions des pales de deux hélices de la même éolienne peuvent être différentes. D'autres formes ou configurations que celles décrites et représentées sur les figures peuvent être envisagées afin d'accorder les vitesses et couples des deux hélices.

Ainsi selon les contraintes imposées par le régime des vents auquel l'éolienne est soumise, on pourra choisir les formes et dimensions des pales de chaque hélice afin d'ajuster leurs vitesse et couples de rotation.

Un dispositif de freinage des hélices est généralement prévu sur les éoliennes. Une éolienne, équipée d'un dispositif d'entraînement selon l'une ou l'autre des formes d'exécution décrites ci-dessus, peut être munie d'un dispositif de freinage et de sécurité connu de la technique. Toutefois, un dispositif de freinage tel que décrit ci-dessous est particulièrement adapté aux éoliennes décrites ici. Les figures 2 et 3 montrent un dispositif de freinage symbolisé en 15 et représenté plus en détail à la figure 6.

Dans le cas d'un dispositif d'entraînement selon la première forme d'exécution de la figure 2, le dispositif de freinage 15 est conçu pour agir simultanément sur les arbres 12 et 13 coaxiaux sur lesquels sont montées les deux hélices. Le dispositif de freinage comprend deux demi tambours 31a et 31 b encerclant l'arbre creux 13 et agissant sur une pluralité de poussoirs 30, disposés dans des ouvertures radiales 130 régulièrement disposées sur le pourtour de l'arbre 13. Comme on le comprend de la figure, durant le fonctionnement de l'éolienne, les poussoirs 30 sont en rotation, entraînés par l'arbre 13. Des moyens connus, non représentés sur la figure permettent de conserver un jeu entre les poussoirs 30 et l'arbre 12 ainsi qu'entre les poussoirs 30 et les demi tambours 31 a et 31 b, de manière à éviter les échauffements et pertes de frottement.

Des moyens d'actionnement, pouvant être des vérins hydrauliques, pneumatiques ou électromécaniques, comme représenté en 32a ou des moyens mécaniques, tels que des dispositifs à came, comme représentés en 32b, peuvent être actionnés pour rapprocher les deux demi tambours 31 a et 31 b afin d'une part de les faire presser contre l'arbre 13 pour freiner cet arbre et d'autre part appuyer contre les poussoirs 30, de manière à les presser contre l'arbre 12 pour le freiner. Des moyens de blocage, schématisés en 34a et 34b permettent d'éviter la rotation des demi tambours 31 a et 31b relativement aux diverses portions du bâti 33a, 33b, 35a, 35b.

Par ce dispositif, la réaction due au freinage exercé sur l'arbre 12 par les poussoirs 30 est reprise par les logements 130 des poussoirs dans l'arbre 13. La réaction finale sur le bâti 35a et 35b de la nacelle sera la différence entre ces deux couples. Elle sera donc plus faible que dans le cas du freinage d'une seule hélice.

Le nombre de poussoirs 30 dépend des paramètres techniques, mais doit être de préférence un nombre pair.

Au lieu de deux demi tambours 31a et 31b, on peut avoir un autre dispositif d'appui sur les poussoirs et de freinage de l'arbre 13, par exemple un dispositif de frein à ruban.

Dans le cas d'un dispositif d'entraînement selon la deuxième forme d'exécution, tel que représenté à la figure 3, le dispositif de freinage sera conçu pour agir simultanément, de la même manière que décrite ci-dessus, sur les arbres coaxiaux 13 et 19.

La description ci-dessus mentionne que l'éolienne fournit de l'énergie à une génératrice ; il est bien entendu que le dispositif d'entraînement selon l'invention peut être associé à une éolienne fournissant de l'énergie sous forme d'un couple de rotation à n'importe quel type de consommateur apte à recevoir cette énergie.

Un premier avantage de la présente l'invention est de proposer un dispositif permettant d'augmenter notablement le rendement aérodynamique d'une éolienne. Ceci se traduit par la possibilité d'extraire plus d'énergie d'une surface de terre/mer allouée pour une ferme éolienne.

Un autre avantage de l'invention est de proposer une solution où l'augmentation de la puissance passe par l'augmentation de la vitesse relative de rotation et non pas par l'augmentation du couple traversant la chaîne cinématique. Les dimensions du dispositif d'entraînement ainsi que de la génératrice3 associée restent donc similaires à celles d'un dispositif d'entraînement d'une hélice simple. D'autre part le coefficient de multiplication du multiplicateur de vitesse peut être divisé par deux (i.e. la multiplication actuelle qui est environ 20-30 passe à 10-15). Ceci peut être réalisé par un simple multiplicateur planétaire à un étage.

L'avantage suivant consiste à maintenir à un niveau acceptable la réaction mécanique du dispositif d'entraînement sur le mât malgré l'augmentation de puissance. Ceci vient du fait que la réaction dans la direction du vent augmente, mais la réaction due au couple engendré par une hélice et repris par l'autre hélice et le système reste en quasi-équilibre dans le plan perpendiculaire à la direction du vent. On peut donc facilement ajouter une hélice à une éolienne comprenant une seule hélice et un mât support dimensionné pour cette seule hélice.

L'avantage supplémentaire consiste en ce que le freinage des deux hélices est fait de sorte que le couple de freinage provenant d'une hélice est compensé par le couple de l'autre, d'où un faible effort sur le bâti de la nacelle par rapport à la solution à une hélice.

Un avantage supplémentaire consiste en ce que le multiplicateur tourne autour de son propre axe central favorisant ainsi un échange thermique avec l'air ambiant, d'où la possibilité de diminuer fortement, voire supprimer le système de refroidissement.

## Revendications

1. Dispositif d'entraînement d'un consommateur (8) par une éolienne comprenant deux hélices contre rotatives, une première hélice (10, 100) étant la première dans le sens de passage du flux de vent, une deuxième hélice (11) étant placée après la première dans le sens de passage du flux du vent,
**caractérisé en ce qu'**il comprend :
un multiplicateur épicycloïdal,
un premier arbre (12) supportant la première hélice (10) étant relié à un train de roues planétaire (17) dudit multiplicateur épicycloïdal,
un deuxième arbre (13) supportent la deuxième hélice (11) étant relié à la couronne (18) dudit multiplicateur épicycloïdal,
la roue solaire (19) dudit multiplicateur épicycloïdal étant reliée à un troisième arbre (19) entraînant ledit consommateur.

2. Dispositif d'entraînement selon la revendication 1, **caractérisé en ce que** le multiplicateur épicycloïdal est logé dans le moyeu de la deuxième hélice.

3. Dispositif d'entraînement selon la revendication 1, **caractérisé en ce que** le deuxième arbre (13) est creux et est disposé coaxialement autour du premier arbre (12).

4. Dispositif d'entraînement selon la revendication 2, **caractérisé en ce que** le deuxième arbre (13) est creux et est disposé coaxialement autour du troisième arbre (19).

5. Dispositif d'entraînement selon l'une des revendications précédentes 3 ou 4 **caractérisé en ce qu'**il comprend en outre un dispositif de freinage (15) agissant simultanément sur le deuxième arbre creux (13) ainsi que sur l'arbre (12 ; 19) placé coaxialement à l'intérieur dudit deuxième arbre

6. Dispositif d'entraînement selon la revendication 5, **caractérisé en ce que** le dispositif de freinage (15) comprend un moyen de pression (31 a, 31 b), commandé par un moyen d'actionnement (32a, 32b), apte à agir simultanément par frottement sur un pourtour extérieur du deuxième arbre (13) afin de le freiner et à appuyer sur une pluralité de poussoir (30) disposés dans des ouvertures radiales (130) du deuxième arbre de manière à ce que lesdits poussoirs agissent par frottement sur un pourtour extérieur dudit arbre (12,19) placé coaxialement à l'intérieur dudit deuxième arbre, afin de le freiner.

7. Dispositif d'entraînement selon la revendication 6, **caractérisé en ce que** le moyen de pression comprend deux demi tambours (31 a, 31b).

8. Dispositif d'entraînement selon la revendication 6, **caractérisé en ce que** le moyen de pression comprend un frein à ruban.

9. Dispositif d'entraînement selon l'une des revendications 6 à 8, **caractérisé en ce que** le moyen d'actionnement comprend au moins un vérin (32a) hydraulique ou pneumatique ou électromécanique.

10. Dispositif d'entraînement selon l'une des revendications 6 à 8, **caractérisé en ce que** le moyen d'actionnement comprend au moins un dispositif mécanique à came (32b).

11. Dispositif d'entraînement selon l'une des revendications précédentes, **caractérisé en ce qu'**il est associé à un consommateur qui est une génératrice électrique.

12. Dispositif d'entraînement selon l'une des revendications précédentes, **caractérisé en ce qu'**il est associé à deux hélices (10, 11) ayant des caractéristiques aérodynamiques différentes.

13. Dispositif d'entraînement selon la revendication 12, **caractérisé en ce que** le diamètre extérieur de rotation des deux hélices est différent.

14. Dispositif d'entraînement selon la revendication 13, **caractérisé en ce que** le diamètre de rotation de la première hélice (10, 100) est inférieur à celui de la deuxième hélice (12).

15. Dispositif d'entraînement selon l'une des revendications 12 à 14, **caractérisé en ce qu'**au moins une des deux hélices (100) tourne autour d'une surface conique présentant un angle α relativement à un plan perpendiculaire à l'axe de rotation de l'hélice.

16. Dispositif d'entraînement selon la revendication 15, **caractérisé en ce que** l'angle α est inférieur à 10°.

17. Dispositif d'entraînement selon la revendication 15, **caractérisé en ce que** l'angle α est inférieur à 5°.

18. Dispositif d'entraînement selon la revendication 15, **caractérisé en ce que** l'angle α est inférieur à 3°.

19. Dispositif d'entraînement selon l'une des revendications 12 à 18, **caractérisé en ce que** l'axe longitudinal de chaque pale (102, 103) d'une hélice est courbé.

20. Eolienne à deux hélices contre rotatives comprenant un dispositif d'entraînement selon l'une des revendications précédentes.

## Claims

1. Drive device for a energy input mechanism (8) operating a wind turbine comprising two counter-rotative propellers, the first one (10, 100) being facing the wind flow, while the second one (11) is placed behind the first propeller,
the wind turbine including:
an epicycloidal multiplier,
a first shaft (12) supporting the first propeller (10) linked to a train of planetary wheels (17) of the epicycloidal multiplier,
a second shaft (13) supporting the second propeller (11) linked to the crown wheel (18) of the epicycloidal multiplier,
the solar wheel (19) of said epicycloidal multiplier being connected to a third shaft driving the afore-mentioned energy input mechanism.

2. Drive device according to claim 1, **characterized in that** the epicycloidal multiplier is lodged in the hub of the second propeller.

3. Drive device according to claim 1, **characterized in that** the second shaft (13) is hollow and coaxially disposed around the first shaft (12).

4. Drive device according to claim 2, **characterized in that** the second shaft (13) is hollow and coaxially disposed around the third shaft (19).

5. Drive device according to anyone of the preceding claims, **characterized in that** it further comprises a braking system (15) that acts simultaneously on the second hollow shaft (13) and on the inner shaft (12, 19) coaxially disposed inside said second shaft.

6. Drive device according to claim 5, **characterized in that** the braking system (15) includes pressure means (31 a, 31 b) commanded by an activation mechanism (32a, 32b), able to act simultaneously by rubbing against the outer surface of second shaft (13) to slow it down, able to press against a plurality of tappets (30) located in radial openings (130) of the second shaft (13), so that said tappets rub against the outer surface of said shaft (12, 19) coaxially placed inside the second shaft, to slow down the said second shaft .

7. Drive device according to claim 6, **characterized in that** the pressure means are composed of two half-drums (31 a, 31 b).

8. Drive device according to claim 6, **characterized in that** the pressure means are composed of a ribbon braking system.

9. Drive device according to anyone of claims 6 to 8, **characterized in that** the activation mechanism includes at least one hydraulic, pneumatic or electromechanical jack (32a).

10. Drive device according to anyone of claims 6 to 8, **characterized in that** the activation mechanism includes at least one mechanical cam system (32b).

11. Drive device according to anyone of the preceding claims, **characterized in that** it is associated to an energy input mechanism that is an electric generator.

12. Drive device according to claim 1, **characterized in that** it is associated with two propellers (10, 11) that bear different aerodynamic characteristics.

13. Drive device according to claim 12, **characterized in that** the outer rotation diameters of both propellers are different.

14. Drive device according to claim 13, **characterized in that** the rotation diameter of the first propeller (10, 100) is inferior to that of the second propeller (12).

15. Drive device according to anyone of claims 12 to 14, **characterized in that** at least one of the two propellers (100) rotates around a conical surface that generates an angle α with a plane perpendicular to the rotation axis of the propeller.

16. Drive device according to claim 15, **characterized in that** angle α is below 10°.

17. Drive device according to claim 15, **characterized in that** angle α is below 5°.

18. Drive device according to claim 15, **characterized in that** angle α is below 3°.

19. Drive device according to anyone of claims 12 to 18, **characterized in that** the longitudinal axis of each blade (102, 103) is curved.

20. Windmill provided with two counter-rotative propellers and comprising a drive device according to anyone of the preceding claims.

## Patentansprüche

1. Antriebsvorrichtung eines Verbrauchers (8) durch eine Windkraftanlage, die zwei gegenläufig drehende Rotor umfasst, wobei der erste Rotor (10, 100) der erste in Richtung des Durchgangs des Windstroms ist, wobei ein zweiter Rotor nach dem ersten in Richtung des Durchgangs des Windstroms angeordnet ist,
**dadurch gekennzeichnet, dass** sie umfasst:
einen epizykloidalen Multiplikator,
eine erste Welle (12), die den ersten Rotor (10) trägt, die mit einem Planetenradgetriebe (17) des epizykloidalen Multiplikators verbunden ist,
eine zweite Welle (13), die den zweiten Rotor (11) trägt, die mit dem Kranz (18) des epizykloidalen Multiplikators verbunden ist,
wobei das Sonnenrad (19) des epizykloidalen Multiplikators mit einer dritten Welle (19) verbunden ist, die den Verbraucher antreibt.

2. Antriebsvorrichtung nach Anspruch 1, **dadurch gekennzeichnet, dass** der epizykloidale Multiplikator in der Nabe des zweiten Rotors angeordnet ist.

3. Antriebsvorrichtung nach Anspruch 1, **dadurch gekennzeichnet, dass** die zweite Welle (13) hohl ist und koaxial um die erste Welle (12) angeordnet ist.

4. Antriebsvorrichtung nach Anspruch 2, **dadurch gekennzeichnet, dass** die zweite Welle (13) hohl ist und koaxial um die dritte Welle (19) angeordnet ist.

5. Antriebsvorrichtung nach einem der vorangehenden Ansprüche 3 oder 4, **dadurch gekennzeichnet, dass** sie weiterhin eine Bremsvorrichtung (15) umfasst, die gleichzeitig auf die zweite hohle Welle (13) sowie auf die Welle (12; 19) einwirkt, die koaxial in der zweiten Welle angeordnet ist.

6. Antriebsvorrichtung nach Anspruch 5, **dadurch gekennzeichnet, dass** die Bremsvorrichtung (15) ein von einem Betätigungsmittel (32a, 32b) gesteuertes Druckmittel (31a, 31b) umfasst, das imstande ist, gleichzeitig durch Reibung auf einen äußeren Umfang der zweiten Welle (13) einzuwirken, um sie zu bremsen und auf eine Vielzahl von Drückern (30), die in radialen Öffnungen (130) der zweite Welle angeordnet sind, derart zu drücken, dass die Drücker durch Reibung auf einen äußeren Umfang der Welle (12, 19) wirken, die koaxial in der zweiten Welle angeordnet ist, um sie zu bremsen.

7. Antriebsvorrichtung nach Anspruch 6, **dadurch gekennzeichnet, dass** das Druckmittel zwei Halbtrommeln (31a, 31b) umfasst.

8. Antriebsvorrichtung nach Anspruch 6, **dadurch gekennzeichnet, dass** das Druckmittel eine Bandbremse umfasst.

9. Antriebsvorrichtung nach einem der Ansprüche 6 bis 8, **dadurch gekennzeichnet, dass** das Betätigungsmittel mindestens einen hydraulischen oder pneumatischen oder elektromechanischen Zylinder (32a) umfasst.

10. Antriebsvorrichtung nach einem der Ansprüche 6 bis 8, **dadurch gekennzeichnet, dass** das Betätigungsmittel mindestens eine mechanische Vorrichtung mit Nocken (32b) umfasst.

11. Antriebsvorrichtung nach einem der vorangehenden Ansprüche, **dadurch gekennzeichnet, dass** sie mit einem Verbraucher verbunden ist, der ein elektrischer Generator ist.

12. Antriebsvorrichtung nach einem der vorangehenden Ansprüche, **dadurch gekennzeichnet, dass** sie mit zwei Rotoren (10, 11) verbunden ist, die unterschiedliche aerodynamische Merkmale haben.

13. Antriebsvorrichtung nach Anspruch 12, **dadurch gekennzeichnet, dass** der äußere Rotationsdurchmesser der zwei Rotoren unterschiedlich ist.

14. Antriebsvorrichtung nach Anspruch 13, **dadurch gekennzeichnet, dass** der Rotationsdurchmesser des ersten Rotors (10, 100) kleiner ist als der des zweiten Rotors (12).

15. Antriebsvorrichtung nach einem der Ansprüche 12 bis 14, **dadurch gekennzeichnet, dass** mindestens einer der Rotoren (100) um eine konische Fläche dreht, die einen Winkel α im Verhältnis zu einer Ebene senkrecht zur Rotationsachse des Rotors hat.

16. Antriebsvorrichtung nach Anspruch 15, **dadurch gekennzeichnet, dass** der Winkel α kleiner als 10° ist.

17. Antriebsvorrichtung nach Anspruch 15, **dadurch gekennzeichnet, dass** der Winkel α kleiner als 5° ist.

18. Antriebsvorrichtung nach Anspruch 15, **dadurch gekennzeichnet, dass** der Winkel α kleiner als 3° ist.

19. Antriebsvorrichtung nach einem der Ansprüche 12 bis 18, **dadurch gekennzeichnet, dass** die Längsachse jedes Blatts (102, 103) eines Rotors gekrümmt ist.

20. Windkraftanlage mit zwei gegenläufig drehenden Rotoren, die eine Antriebsvorrichtung nach einem der vorangehenden Ansprüche umfasst.
